# EUROPÄISCHE PATENTSCHRIFT

(11) **EP 0 924 453 B1**
(45) Veröffentlichungstag und Bekanntmachung des Hinweises auf die Patenterteilung: **09.02.2005**
(21) Anmeldenummer: 98123343.0
(22) Anmeldetag: 08.12.1998
(51) Int. Cl.: F16L 37/084

(54) **Lösbare Rohrverbindung, insbesondere für luftführende Rohre**
Releasable pipe connection, particularly for air conveying pipes
Raccord de conduit détachable, en particulier pour les conduits de transport d'air

(30) Priorität: 20.12.1997 DE 19756987
(43) Veröffentlichungstag der Anmeldung: 23.06.1999
(73) Patentinhaber: DaimlerChrysler AG, 70567 Stuttgart (DE)
(72) Erfinder: Bandlow, Reiner, 73728 Esslingen (DE); Haseki, Mehmet, 70619 Stuttgart (DE); Schulz, Friedrich, 71726 Benningen (DE); Blume, Gerhard, 37170 Uslar (DE); Coermann, Georg, 70771 Leinfelden-Echterdingen (DE); Fischer, Jürgen, 30161 Hannover (DE); Rohde, Jörg, 29451 Dannenberg (DE)

(56) Entgegenhaltungen:
- EP-A- 0 404 361
- EP-A- 0 806 597
- FR-A- 2 610 694
- US-A- 5 154 451

## Beschreibung

Die Erfindung betrifft eine lösbare Rohrverbindung, insbesondere für luftführende Rohre, nach dem Oberbegriff des Anspruches 1.

Aus der Druckschrift EP 0 452 172 B1 ist eine Rohrverbindung bekannt, mit der zwei aneinandergrenzende Rohrabschnitte dicht zusammengefügt werden. Die Rohrverbindung beinhaltet eine Klemmhülse, die die ineinandergesteckten Rohrenden der Rohrabschnitte umgreift. Um ein versehentliches axiales Lösen der Verbindung zu verhindern, sind an der Klemmhülse radial nach innen einragende Rastnasen ausgebildet, die in Rastausnehmungen einragen, welche an beiden Rohrenden vorgesehen sind. Die Rastausnehmungen bestehen aus einer umlaufenden Rastnut im Bereich des ersten Rohrendes und aus einer Rastöffnung im Bereich des zweiten Rohrendes, wobei die Rastnut und die Rastöffnung in Deckung gebracht werden müssen, damit die Rastnase der Klemmhülse durch die Rastöffnung hindurch bis in die Rastnut einragen kann und durch Formschluß die beiden Rohrenden aneinanderhält.

Problematisch hierbei ist, dass eine sichere Verbindung nur hergestellt werden kann, wenn die Rastöffnung und die Rastnut radial und axial in Deckung liegen; andernfalls ist kein Formschluß und folglich keine sichere Verbindung in beide Achsrichtungen der Rohrabschnitte hergestellt. Infolgedessen ist aber nicht nur die axiale, sondern auch die radiale Zusammenbauposition der Rohrabschnitte konstruktiv vorgegeben und bei der Montage zu beachten. Insbesondere bei gekrümmten Rohrabschnitten erfordert diese Verbindung ein hohes Maß an Fertigungsgenauigkeit und ein exaktes Positionieren der Einbauteile, wobei man entsprechend der Anzahl und der Verteilung der Rastöffnungen auf eine oder auf wenige vorgegebene radiale Lagen beschränkt ist.

Ein weiterer Nachteil liegt darin, dass die Rastnase so lang bemessen sein muß, dass sie die Rastöffnungen des radial außenliegenden Rohrabschnitts durchragt und außerdem bis in die Rastnut des radial innenliegenden Rohrabschnitts eingreifen kann. Dies erschwert aber sowohl die Montage als auch die Demontage der Verbindung, weil die Klemmhülse so stark aufgeweitet werden muss, dass ein von der Rastnase ungehindertes Überstreifen über die beiden Rohrabschnitte möglich ist, ein starkes Aufweiten aber aufgrund der für die Verbindung erforderlichen Festigkeit der Klemmhülse nur mit Mühe zu bewerkstelligen ist. Zudem besteht die Gefahr vorzeitigen Verschleißes infolge Rissbildung.

Aus der Druckschrift EP 0 806 597 A1 ist eine Rohrverbindung bekannt, mit der zwei Rohrabschnitte lösbar zusammengefügt werden können, indem eine verbindende Muffe bzw. Klemmhülse auf die einander zugewandten Rohrenden aufgeschoben wird. Die Klemmhülse besteht aus einem außenliegenden Korpus und einem im Korpus gehaltenen Käfig, an dem Haltefinger ausgebildet sind, die radial nach innen ragen. An der den Haltefingern gegenüberliegenden Stirnseite ist am Korpus der Klemmhülse ein Flansch mit einem sich radial nach innen erstreckenden Vorsprung ausgebildet. In Klemmstellung der Klemmhülse übergreifen der Vorsprung der einen Stirnseite und die Haltefinger an der anderen Stirnseite der Klemmhülse radial überstehende Absätze im Bereich der beiden Rohrenden, wodurch die Rohre formschlüssig aneinander gehalten sind.

Die Klemmhülse besteht aus zwei getrennt ausgebildeten Teilen - den außenliegenden Korpus und den innenliegenden Käfig -, die so aufeinander abgestimmt sein müssen, dass der Käfig sicher im Korpus gehalten ist und die auftretenden Klemmkräfte übertragen kann. Der Käfig besteht aus zwei Ringen, die über mehrere axiale Stege miteinander verbunden sind, wobei ausgehend von einem der beiden Ringe die Haltefinger sich radial nach innen erstrecken.

Diese Rohrverbindung ist relativ kompliziert aufgebaut. Zusätzlich zu der aufwendigen Fertigung insbesondere der Klemmhülse ergibt sich das Problem, die Verbindung hinreichend belastbar auszubilden, denn die Einzelteile der Klemmhülse müssen in der Lage sein, insbesondere die axialen Kräfte in der Rohrverbindung über die vorgesehene Lebensdauer schadlos zu übertragen. Der komplizierte Aufbau der Klemmhülse hat jedoch teilweise hohe Belastungen der Komponenten des innenliegenden Käfigs mit der Gefahr von Rissbildung und vorzeitigem Verschleiß zur Folge.

Aus der Druckschrift EP 0 404 361 A1 ist eine Rohrverbindung bekannt, bestehend aus einer Klemmhülse, die auf die Stirnseiten zweier zu verbindender Rohrabschnitte aufgeschoben wird und Rastkanten auf der Mantelfläche jedes Rohrabschnittes axial formschlüssig hintergreift. Die Klemmhülse ist konisch ausgebildet, wobei der Boden des Konus von einem stirnseitigen, mit einer zentralen Ausnehmung versehenen Ring gebildet ist, der einteilig mit den Seitenwänden des Konus ausgeführt ist. Dieser Ring bildet eine in der Ebene der Stirnseite liegende und gegenüber den Seitenwänden radial einragende Rastschulter, die in Klemmposition in eine korrespondierende Rastnut eingeschoben wird. Zum Erreichen der Klemmposition, in der die Rastschulter in die Rastnut einrastet, muss die Rastschulter radial aufgeweitet werden, wobei darauf geachtet werden muss, dass die Aufweitung im Elastizitätsbereich des Materials der Klemmhülse liegen muss, damit die Rastschulter wieder ihre Ausgangsgröße wie vor der Aufweitung erreichen kann. Aufgrund der einteiligen, stabilen Ausführung mit den Seitenwänden der Klemmhülse ist aber eine radiale Dehnung nur mit hohen Kräften zu bewerkstelligen, was jedoch die Gefahr birgt, dass die Streckgrenze versehentlich überschritten wird. Außerdem können die hohen Kräfte kaum manuell aufgebracht werden, so dass für die Montage Werkzeug erforderlich ist.

Im Bereich der gegenüberliegenden Stirnseite ist die Seitenwand der Klemmhülse über zwei axiale Stege mit einem umlaufenden Rastring verbunden, der dem Klemmhülsen-Korpus vorgelagert ist und die Stirnseite der Klemmhülse bildet. Dieser Rastring greift in Klemmposition in eine zugeordnete Rastnut auf der Mantelfläche des zweiten Rohrabschnitts ein und muss zum Erreichen der Rastposition ebenfalls radial aufgeweitet werden, was aufgrund der ringförmigen Ausführung jedoch ebenso wie auf der gegenüberliegenden Stirnseite der Klemmhülse den Einsatz hoher Kräfte voraussetzt.

Der Erfindung liegt das Problem zugrunde, eine verschleißarme lösbare Rohrverbindung anzugeben, die einen variablen Zusammenbau aneinandergrenzender Rohrabschnitte erlaubt.

Dieses Problem wird erfindungsgemäß mit den Merkmalen des Anspruches 1 gelöst.

Da wenigstens zwei Rastglieder in zwei parallelen Ebenen an der Klemmhülse ausgebildet sind, ist es möglich, jedes Rastglied einem der beiden Rohrabschnitte zuzuordnen und somit die Verbindung zwischen einem der beiden Rohrabschnitte und der Klemmhülse unabhängig von der entsprechenden Verbindung zum anderen Rohrabschnitt zu halten. Dies hat zur Folge, dass die Position der beiden Rohrabschnitte relativ zueinander nur noch mittelbar über die Verrastung mittels der Klemmhülse festgelegt ist, so daß die Winkellage der beiden Rohrabschnitte weitgehend unabhängig von der Geometrie der Rohrabschnitte einstellbar ist und im wesentlichen nur von der konstruktiven Ausbildung der Klemmhülse abhängt; die Variabilität beim Zusammenbau der Rohrabschnitte ist erhöht.

Weiterhin ist vorteilhaft, daß die Rastglieder an der Klemmhülse zur Bildung einer formschlüssigen Verbindung jeweils nur eine Klemmstufe an einem der Rohrabschnitte hintergreifen müssen. Daher reicht es aus, die Rastglieder radial nach innen nur so stark auszuprägen, daß in Achsrichtung ein sicherer Formschluß mit der jeweiligen Klemmstufe möglich ist. Die Rastglieder ragen weniger weit nach innen als beim Stand der Technik, so daß die Klemmhülse beim Überführen von Lösestellung in Klemmstellung bzw. umgekehrt weniger stark aufgeweitet werden muß und die Verschleißgefahr reduziert ist.

Sofern die Rastglieder gemäß einer zweckmäßigen Ausführung im Bereich gegenüberliegender axialer Stirnseiten der Klemmhülse ausgebildet sind, kann eines der Rastglieder als Verliersicherung in Lösestellung der Klemmsicherung wirken, indem dieses Rastglied die Klemmstufe eines Rohrabschnitts, welche sich radial über den Außenmantel dieses Rohrabschnitts erhebt, auch in Lösestellung der Klemmhülse hintergreift. Die Klemmhülse kann um ihre Achse ohne Behinderung durch die Klemmstufe gedreht werden und es ist eine axiale Verschiebung in Richtung des der Klemmstufe abgewandten Rohrendes des Stutzens möglich, jedoch keine Verschiebung über die Klemmstufe hinaus.

Es sind vorzugsweise eine Mehrzahl einzelner Rastglieder, insbesondere drei, im Bereich jeder Stirnseite der Klemmhülse vorgesehen, die gleichmäßig über den Umfang verteilt jeweils in einer Ebene lotrecht zur Rohrachse angeordnet sind. Diese Ausführung hat den Vorteil, daß die Klemmkräfte gleichmäßig über den Umfang der Klemmhülse übertragen werden und daß ein Verhaken der Klemmhülse, bei dem die Klemmhülsenachse schräg zur Rohrachse verläuft, vermieden wird.

Die Rastglieder gegenüberliegender Stirnseiten sind bevorzugt versetzt zueinander angeordnet, um über den Umfang der Klemmhülse eine näherungsweise gleichmäßige Steifigkeitsverteilung in der Wandung der Klemmhülse zu erreichen.

Die Klemmhülse ist vorzugsweise radial elastisch aufweitbar, um ein Überschieben der Klemmhülse über die radial erhabene Klemmstufe am zweiten Rohrabschnitt zu ermöglichen. In dieser Ausführung wird ein Bajonettverschluß nicht benötigt. Die Elastizität in Radialrichtung wird zweckmäßig konstruktiv erzielt, indem die Rastglieder an einer Stirnseite an axial überstehenden Laschen angeordnet sind, die mit geringem Kraftaufwand elastisch aufgebogen werden können. Zusätzlich können axiale Dehnungsschlitze in der Wanddung der Klemmhülse vorgesehen sein.

Um die Klemmhülse leichter in ihre Klemmstellung überführen zu können, können die Rastglieder in Achsrichtung gesehen rampenförmig ausgebildet sein, so daß die Rastglieder beim Überschieben über die Klemmstufe kontinuierlich aufgebogen werden und nach Erreichen der Klemmstellung in ihre radiale Ausgangsposition zurückschnappen, in der die Rastglieder mit Formschluß die Klemmstufe hintergreifen. Die Rastglieder greifen bevorzugt in Eingriffsnuten ein, die an einem der Rohrabschnitte ausgebildet sind und sich radial bis zum Radius der Klemmstufe erstrecken.

Um ein Lösen der Verbindung zu erleichtern, ist eine Seite der Eingriffsnuten als Entriegelungsrampe ausgebildet, deren Gradient die Längsachse der Rohrverbindung kreuzt. Zum Lösen wird die Klemmhülse verdreht, so daß das Rastglied auf die Entriegelungsrampe geschoben wird und zweckmäßig das radiale Niveau der Klemmstufe erreicht. Aus dieser Position kann die Klemmhülse axial abgezogen werden, so daß die Rohrverbindung gelöst ist.

Weitere Vorteile und zweckmäßige Ausführungsformen sind den weiteren Ansprüchen, der Figurenbeschreibung und den Zeichnungen zu entnehmen. Es zeigen:
- Fig. 1: eine Seitenansicht auf eine Rohrverbindung in Lösestellung,
- Fig. 2: die Rohrverbindung in Klemmstellung,
- Fig. 3: eine Ansicht gemäß der Schnittlinie III-III aus Fig. 1,
- Fig. 4: eine Draufsicht auf die Klemmhülse in einer anderen Ausführung,
- Fig. 5: eine Ansicht der Klemmhülse gemäß der Schnittlinie V-V aus Fig. 4,
- Fig. 6: eine der Klemmstufen im Schnitt,
- Fig. 7: eine Ansicht der filemmstufe gemäß der Schnittlinie VII-VII aus Fig. 6.

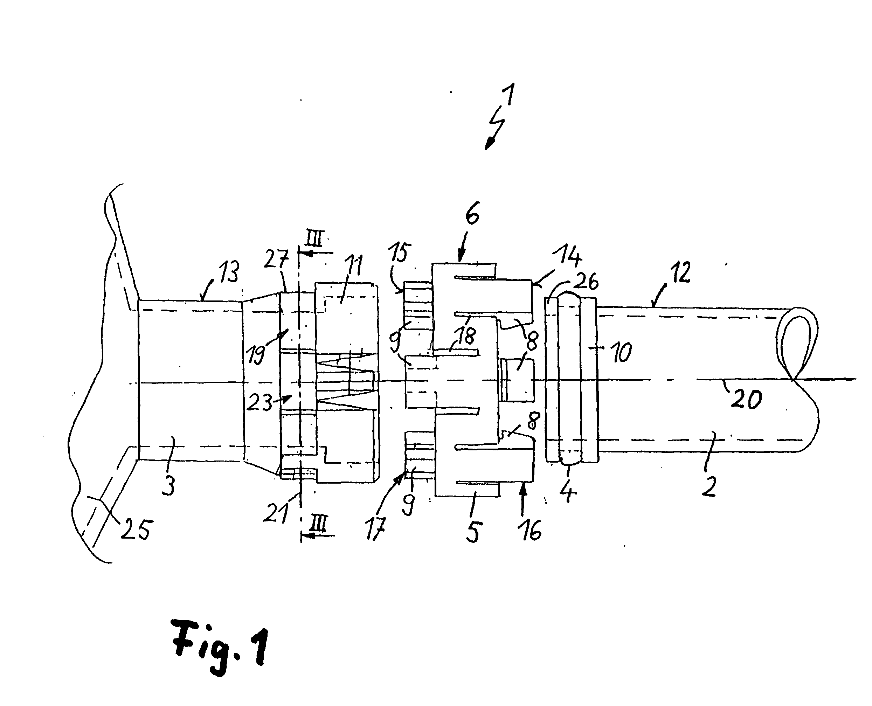

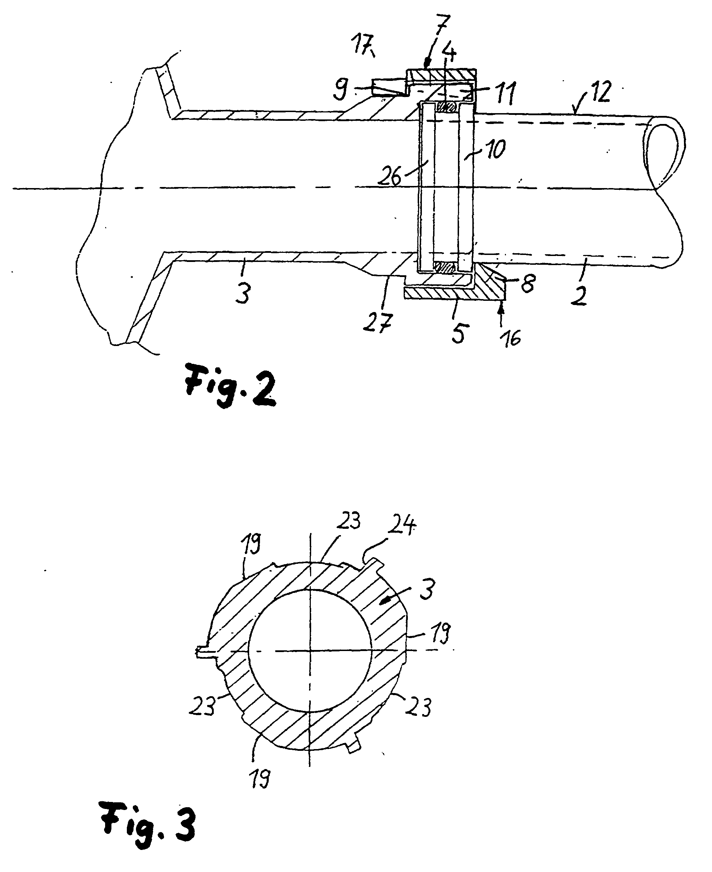

In Fig. 1 und 2 ist eine Rohrverbindung 1 gezeigt, mit der zwei stirnseitig aneinandergrenzende Rohrabschnitte 2, 3, die im Ausführungsbeispiel Teil eines luftführenden Rohrleitungssystems für einen Ladeluftkühler 25 sind, mit Hilfe einer Klemmhülse 5 luftdicht verbunden werden. In Fig. 1 befindet sich die Klemmhülse 5 in ihrer Lösestellung 6, in Fig. 2 in Klemmstellung 7, in der die Rohrabschnitte 2 und 3 luftdicht verbunden sind. In Klemmstellung 7 ist der Rohrabschnitt 2 geringfügig axial in den Rohrabschnitt 3 eingeschoben, dessen Stirnseite radial aufgeweitet ist. Um Fehlluftströme zu verhindern, ist radial zwischen dem Außenmantel 12 des Rohrabschnitts 2 und dem Innenmantel des Rohrabschnitts 3 eine als Dichtring ausgebildete Dichtung 4 eingeklemmt. Der Dichtring liegt hierbei auf dem Außenmantel 12 des Rohrabschnitts 2 auf und ist axial zwischen einem stirnseitigen, radial erhabenen Absatz 26 und einer zum Absatz 26 beabstandeten, radial ebenfalls erhabenen Klemmstufe 10 auf dem Rohrabschnitt 2 festgelegt, wobei der Absatz 26 und die Klemmstufe 10 zweckmäßig einteilig mit dem Rohrabschnitt 2 ausgebildet sind.

Der axial sich überlappende Abschnitt der beiden Rohrabschnitte 2 und 3 ist von der radial außenliegenden Klemmhülse 5 überdeckt. Um eine dichte, leicht zu montierende und wieder zu lösende Verbindung zu schaffen, weist die Klemmhülse 5 im Bereich ihrer beiden Stirnseiten 14, 15 Rastglieder 8 und 9 auf, die einteilig mit der Klemmhülse ausgebildet sind und über die Klemmstufe 10 am ersten Rohrabschnitt 2 bzw. eine weitere, radial erhabene Klemmstufe 11 am zweiten Rohrabschnitt 3 geschoben werden und an der axial abgewandten Seitenfläche jeder Klemmstufe 10, 11 verrasten, so daß in Achsrichtung ein Formschluß erzeugt wird. An jeder Stirnseite der Klemmhülse 5 sind jeweils drei Rastglieder 8, 9 gleichmäßig über den Umfang verteilt in einem Winkelabstand von 120° angeordnet; die Rastglieder gegenüberliegender Stirnseiten sind versetzt zueinander angeordnet, insbesondere in einem Winkelabstand von etwa 60°.

Jedes der Rastglieder 8, 9 ist an einer Lasche 16 bzw. 17 ausgebildet, wobei die Laschen 16, 17 den Korpus der Klemmhülse 5 axial überragen. Wie Fig. 1 zu entnehmen, sind zu beiden Seiten jeder Lasche 16, 17 Dehnungsschlitze 18 in die Wandung der Klemmhülse 5 eingebracht, die ein radiales Aufweiten der Klemmhülse beim Überschieben über die Klemmstufe 10 bzw. 11 während der Montage bzw. der Demontage der Rohrverbindung ermöglichen.

Das Überschieben über die Klemmstufen 10, 11 wird durch eine rampenförmige Ausbildung der Rastglieder 8, 9 erleichtert, wobei die Schmalseite jedes Rastglieds auf der axial außenliegenden Seite der Klemmhülse 5 liegt.

Wie Fig. 3 in Verbindung mit Fig. 1 zu entnehmen, ist am Rohrabschnitt 3 axial unmittelbar anschließend an die Klemmstufe 11 ein Abschnitt mit axialen Eingriffsnuten 23 ausgebildet, in die die Rastglieder 9, die die Klemmstufe 11 hintergreifen, in Klemmstellung der Klemmhülse 5 einragen. Die Anzahl der Eingriffsnuten 23 entspricht der Anzahl an Rastgliedern 9. Die Eingriffsnuten 23 sind in einem Absatz 27 ausgebildet, der Teil der Wandung des Rohrabschnitts 3 ist und sich axial an die Klemmstufe 11 anschließt (Fig. 2). Eine Seite der Eingriffsnut 23 ist als Entriegelungsrampe 19 ausgebildet, die in Umfangsrichtung ansteigt, so daß der Gradient der Entriegelungsrampe 19 in einer Ebene 21 liegt, die lotrecht zur Längsachse 20 der Rohrabschnitte steht. Die Entriegelungsrampe 19 erstreckt sich etwa vom Boden der Eingriffsnut 23 bis zum radialen Niveau der Klemmstufe 11. Um die Verbindung zu lösen, kann die Klemmhülse 5 in der Weise gedreht werden, daß die Rastglieder 9 entlang der Entriegelungsrampe 19 ansteigen. Sobald die Rastglieder 9 auf dem Niveau der Klemmstufe 11 liegen, kann die Klemmhülse axial ohne Behinderung durch die Klemmstufe 11 abgezogen werden.

Auf der anderen Seite der Eingriffsnut 23 ist ein Anschlag 24 ausgebildet, der verhindert, daß die Klemmhülse 5 in diese Richtung verdreht werden kann. Somit ist die Drehrichtung, um die Klemmhülse in Lösestellung zu versetzen, eindeutig festgelegt.

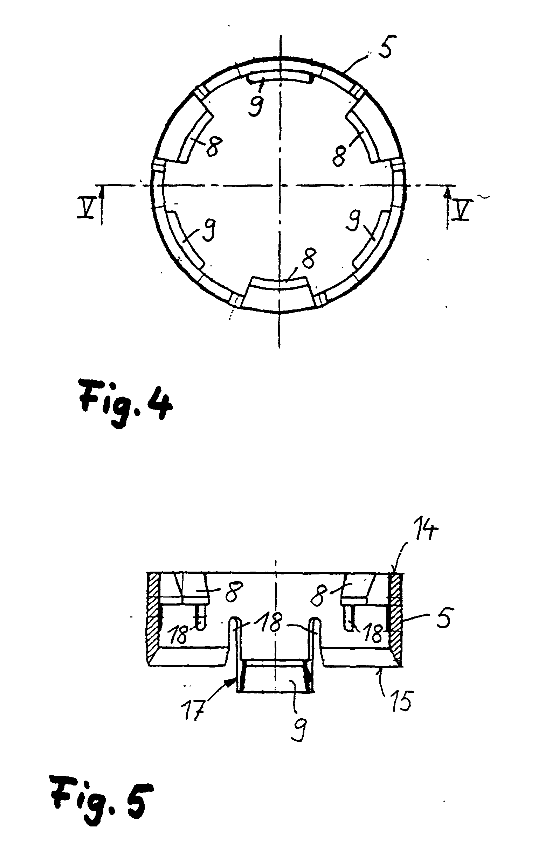

Die Fig. 4 und 5 zeigen eine Klemmhülse 5 in einer modifizierten Ausführung. Die Rastglieder 8 liegen im Innenraum der Klemmhülse 5, ohne axial über den Korpus der Klemmhülse 5 hinauszuragen. Die Rastglieder 8 im Bereich der Stirnseite 14 ragen radial weiter in den Innenraum der Klemmhülse ein als die Rastglieder 9 im Bereich der gegenüberliegenden Stirnseite 15. Die Klemmhülse 5 ist im Bereich der Stirnseite 14 steifer ausgeprägt als an der gegenüberliegenden Stirnseite 15, an der die Rastglieder 9 an den Laschen 17 axial überstehen und aufgrund der geringeren Steifigkeit radial aufgebogen werden können. Die Elastizität im Bereich der Stirnseite 15 wird noch durch die axialen Dehnungsschlitze 18 unterstützt.

Da die Klemmhülse 5 an der Stirnseite 14 nur eine geringe radiale Elastizität aufweist, eignen sich die Rastglieder 8 als Verliersicherung, da die Klemmhülse im Bereich dieses Abschnitts nur unter großem Aufwand aufgeweitet werden kann und die Klemmhülse daher nicht ohne weiteres über die von den Rastgliedern 8 hintergriffene Klemmstufe gezogen werden kann.

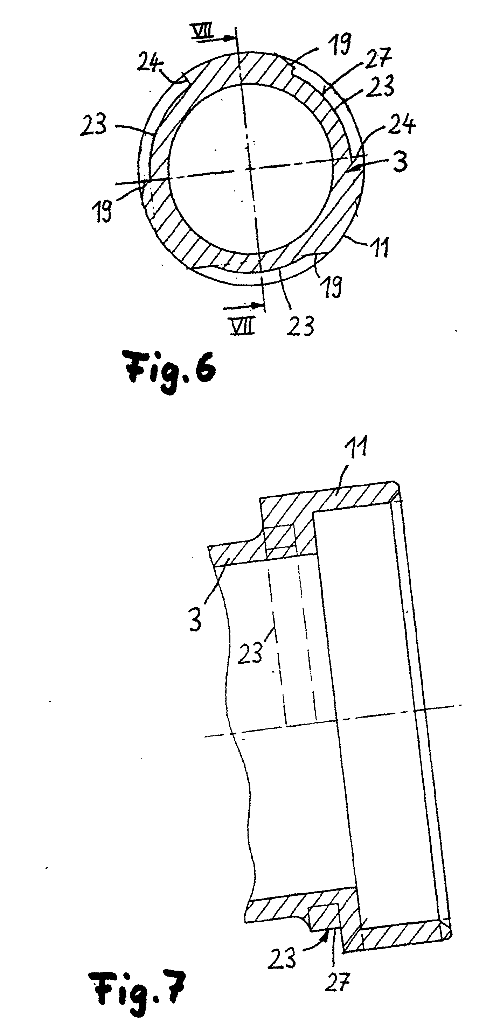

Die Fig. 6 und 7 zeigen die Klemmstufe 11 am Rohrabschnitt 3 in einer anderen Ausführung. Der Boden der drei Eingriffsnuten 23 verläuft radial in Höhe des Absatzes 27 des Rohrabschnitts 3, jede Eingriffsnut erstreckt sich radial von der Höhe des Absatzes 27 bis zum Radius der Klemmstufe 11. Eine Seite der Eingriffsnuten 23 ist jeweils als Entriegelungsrampe 19 ausgebildet, die in Umfangsrichtung vom Boden der Eingriffsnut bis zum Radius der Klemmstufe 11 ansteigt und durch Verdrehen der Klemmhülse ein Entriegeln ermöglicht. Die andere Seite ist bei zwei der drei Eingriffsnuten als radial verlaufender Anschlag 24 ausgebildet.

Die Entriegelungsrampe 19 ist als ebene Fläche ausgeführt. Es sind aber auch konkav oder konvex gewölbte Flächen möglich.

## Patentansprüche

1. Lösbare Rohrverbindung, insbesondere für luftführende Rohre, mit zwei ineinander steckbaren Rohrabschnitten (2, 3), einer zwischen den Rohrabschnitten (2, 3) angeordneten Dichtung (4) und einer Klemmhülse (5), die zwischen einer Lösestellung (6) und einer Klemmstellung (7) verstellbar angeordnet ist und Rastmittel (8, 9) zur axialen Sicherung der Rohrabschnitte (2, 3) aufweist, wobei als Rastmittel (8, 9) im Bereich gegenüberliegender axialer Stirnseiten (14, 15) der Klemmhülse (5) jeweils eine Mehrzahl radial nach innen einragender Rastglieder (8, 9) an der Klemmhülse (5) vorgesehen sind, die in Klemmstellung (7) der Klemmhülse (5) jeweils eine radial erhabene Klemmstufe (10, 11) am Außenmantel (12, 13) jedes Rohrabschnitts (2, 3) hintergreifen,
**dadurch gekennzeichnet,**
**dass** die Rastglieder (8, 9) an jeder Stirnseite (14, 15) an axial überstehenden, den Korpus der Klemmhülse (5) überragenden Laschen (16, 17) ausgebildet sind.

2. Rohrverbindung nach Anspruch 1,
**dadurch gekennzeichnet,**
**dass** jeweils drei Rastglieder (8, 9) an einer Stirnseite (14, 15) gleichmäßig mit einem gegenseitigen Abstand von 120° über den Umfang verteilt angeordnet sind.

3. Rohrverbindung nach Anspruch 1 oder 2,
**dadurch gekennzeichnet,**
**dass** die Rastglieder (8, 9) gegenüberliegender Stirnseiten (14, 15) um etwa 60° zueinander versetzt angeordnet sind.

4. Rohrverbindung nach einem der Ansprüche 1 bis 3,
**dadurch gekennzeichnet,**
**dass** die Klemmhülse (5) radial elastisch aufweitbar ist.

5. Rohrverbindung nach einem der Ansprüche 1 bis 4,
**dadurch gekennzeichnet,**
**dass** die Rastglieder (8, 9) in Achsrichtung der Klemmhülse (5) gesehen rampenförmig ausgebildet sind, wobei die Schmalseite eines Rastglieds (8, 9) axial außenliegend angeordnet ist.

6. Rohrverbindung nach einem der Ansprüche 1 bis 5,
**dadurch gekennzeichnet,**
**dass** die Klemmhülse (5) axiale Dehnungsschlitze (18) aufweist.

7. Rohrverbindung nach einem der Ansprüche 1 bis 6,
**dadurch gekennzeichnet,**
**dass** die radial erhabene Klemmstufe (10, 11) am Außenmantel (12, 13) eines Rohrabschnitts (2, 3) umlaufend und durchgehend ausgebildet ist.

8. Rohrverbindung nach einem der Ansprüche 1 bis 7,
**dadurch gekennzeichnet,**
**dass** einer Klemmstufe (11) eine Eingriffsnut (23) für ein Rastglied (9) zugeordnet ist.

9. Rohrverbindung nach Anspruch 8,
**dadurch gekennzeichnet,**
**dass** eine Seite der Eingriffsnut (23) als Entriegelungsrampe (19) ausgebildet ist, wobei der Gradient der Entriegelungsrampe (19) in einer Ebene (21) lotrecht zur Längsachse (20) des Rohrabschnitts (3) liegt.

10. Rohrverbindung nach Anspruch 9,
**dadurch gekennzeichnet,**
**daß** die Entriegelungsrampe (19) radial vom Boden der Eingriffsnut (23) bis zum Radius der Klemmstufe (11) ansteigt.

11. Rohrverbindung nach einem der Ansprüche 8 bis 10,
**dadurch gekennzeichnet,**
**dass** eine Seite der Eingriffsnut (23) als Anschlag (24) für ein Rastglied (9) ausgebildet ist.

## Claims

1. A detachable pipe connection, in particular for air-conducting pipes, having two pipe sections which can be inserted one inside the other (2, 3), a seal (4) positioned between the pipe sections (2, 3) and a clamping sleeve (5) which is positioned such that it can be adjusted between a loose position (6) and a clamped position (7) and has locking means (8, 9) to secure the pipe sections (2, 3) axially, a plurality of radially inwardly projecting locking elements (8, 9) being provided on the clamping sleeve (5) as the locking means (8, 9) in the area of each of the opposing axial front faces (14, 15) of the clamping sleeve (5), said locking elements engaging behind a radially raised clamping stage (10, 11) on the outer casings (12, 13) of each of the pipe sections (2, 3),
**characterised in that**
the locking elements (8, 9) on each front face (14, 15) are formed on axially projecting plates (16, 17) which extend beyond the body of the clamping sleeve (5).

2. A pipe connection in accordance with claim 1,
**characterised in that**
on each front face (14, 15) three locking elements (8, 9) are positioned evenly around the circumference 120° apart.

3. A pipe connection in accordance with claim 1 or 2,
**characterised in that**
the locking elements (8, 9) on opposing front faces (14, 15) are positioned offset by some 60° in relation to one another.

4. A pipe connection in accordance with one of claims 1 to 3,
**characterised in that**
the clamping sleeve (5) can be expanded elastically radially.

5. A pipe connection in accordance with one of claims 1 to 4,
**characterised in that**
seen axially along the clamping sleeve (5), the locking elements (8, 9) are ramp-shaped in design, the narrow side of a locking element (8, 9) being positioned axially on the outside.

6. A pipe connection in accordance with one of claims 1 to 5,
**characterised in that**
the clamping sleeve (5) has axial expansion slits (18).

7. A pipe connection in accordance with one of claims 1 to 6,
**characterised in that**
the radially raised clamping stage (10, 11) is designed so that it runs around and passes through the outer casing (12, 13) of a pipe section (2, 3).

8. A pipe connection in accordance with one of claims 1 to 7,
**characterised in that**
an engaging groove (23) for a locking element (9) is assigned to a clamping stage (11).

9. A pipe connection in accordance with claim 8,
**characterised in that**
one side of the engaging groove (23) is designed as an unlocking ramp (19), the gradient of the unlocking ramp (19) lying in a plane (21) perpendicular to the longitudinal axis (20) of the pipe section (3).

10. A pipe connection in accordance with claim 9,
**characterised in that**
the unlocking ramp (19) rises radially from the base of the engaging groove (23) to the radius of the clamping stage (11).

11. A pipe connection in accordance with one of claims 8 to 10,
**characterised in that**
one side of the engaging groove (23) is designed as a stop (24) for a locking element (9).

## Revendications

1. Raccord de conduit détachable, en particulier pour les conduits de transport d'air, avec deux tronçons de conduit enfichables l'un dans l'autre (2, 3), un joint (4) monté entre les tronçons de conduit (2, 3) et une douille de serrage (5) qui est disposée de manière déplaçable entre une position de desserrage (6) et une position de serrage (7) et qui comporte des moyens à crans (8, 9) pour l'assurage axial des tronçons de conduit (2, 3), dans lequel il est prévu sur la douille de serrage (5), comme moyens à crans (8, 9) dans la zone des faces axiales opposées (14, 15) de la douille de serrage (5), une pluralité d'élément à crans (8, 9) faisant saillie vers l'intérieur dans le sens radial qui, dans la position de serrage (7) de la douille de serrage (5), s'engrènent à l'arrière d'un redent de serrage (10, 11) saillant dans le sens radial sur l'enveloppe extérieure (12, 13) de chaque tronçon de conduit (2, 3),
**caractérisé en ce que**
les élément à crans (8, 9) sur chaque face (14, 15) sont formés sur des colliers de fixation (16, 17) débordant dans le sens axial, faisant saillie par rapport au corps de la douille de serrage (5).

2. Raccord de conduit selon la revendication 1,
**caractérisé en ce que**
trois élément à crans (8, 9) sur une face (14, 15) sont respectivement répartis uniformément sur la périphérie avec un écartement mutuel de 120°.

3. Raccord de conduit selon la revendication 1 ou 2,
**caractérisé en ce que**
les élément à crans (8, 9) des faces opposées (14, 15) sont décalés d'environ 60° les uns par rapport aux autres.

4. Raccord de conduit selon l'une quelconque des revendications 1 à 3,
**caractérisé en ce que**
la douille de serrage (5) peut être élargie de manière élastique dans le sens radial.

5. Raccord de conduit selon l'une quelconque des revendications 1 à 4,
**caractérisé en ce que**
les éléments à crans (8, 9), vus dans le sens de l'axe de la douille de serrage (5), sont configurés en forme de rampe, le petit côté d'un élément à crans (8, 9) étant disposé à l'extérieur dans le sens axial.

6. Raccord de conduit selon l'une quelconque des revendications 1 à 5,
**caractérisé en ce que**
la douille de serrage (5) comporte une fente de dilatation (18).

7. Raccord de conduit selon l'une quelconque des revendications 1 à 6,
**caractérisé en ce que**
le redent de serrage (10, 11) saillant dans le sens radial sur l'enveloppe extérieure (12, 13) d'un tronçon de conduit (2, 3) est configuré de manière circulaire et continue.

8. Raccord de conduit selon l'une quelconque des revendications 1 à 7,
**caractérisé en ce que**
une rainure d'engrènement 23) pour un élément à crans (9) est associée à un redent de serrage (11).

9. Raccord de conduit selon la revendication 8,
**caractérisé en ce que**
un côté de la rainure d'engrènement (23) est configuré comme une rampe de déverrouillage (19), le gradient de la rampe de déverrouillage (19) se trouvant dans un plan (21) perpendiculaire à l'axe longitudinal (20) du tronçon de conduit (3).

10. Raccord de conduit selon la revendication 9,
**caractérisé en ce que**
la rampe de déverrouillage (19) s'élève dans le sens radial entre le fond de la rainure d'engrènement (23) et le rayon du redent de serrage (11).

11. Raccord de conduit selon l'une quelconque des revendications 8 à 10,
**caractérisé en ce que**
un côté de la rainure d'engrènement (23) est configuré comme une butée (24) pour un élément à crans (9).
